(19) Europäisches Patentamt
European Patent Office
Office européen des brevets

(11)  **EP 1 988 105 B1**

(12)  **EUROPEAN PATENT SPECIFICATION**

(45) Date of publication and mention
of the grant of the patent:
**24.02.2010  Bulletin 2010/08**

(51) Int Cl.:
***C08F 220/18*** *(2006.01)*      ***C09D 133/12*** *(2006.01)*

(21) Application number: **08251112.2**

(22) Date of filing: **27.03.2008**

(54) **Aqueous copolymer dispersion and coating composition**

Wässrige Copolymerlösung und Beschichtungszusammensetzung

Dispersion copolymère aqueuse et composition de revêtement

(84) Designated Contracting States:
**DE FR GB IT**

(30) Priority:  **30.04.2007  CN 200710104009**

(43) Date of publication of application:
**05.11.2008  Bulletin 2008/45**

(73) Proprietor: **Rohm and Haas Company
Philadelphia, PA 19106-2399 (US)**

(72) Inventors:
• **Maurice, Alvin Michael
Lansdale, Pennsylvania 19446 (US)**
• **Speece, David Gerald
Reading, Pennsylvania 19610 (US)**

• **Sun, Jiakuan
Shanghai 200335 (CN)**
• **Yang, Huiling
Shanghai 200335 (US)**

(74) Representative: **Kent, Venetia Katherine
Patent Outsourcing Limited
1 King Street
Bakewell
Derbyshire DE 45 1DZ (GB)**

(56) References cited:
**EP-A- 0 012 949      EP-A- 1 193 298
FR-A- 2 867 478**

**Description**

Background

This invention relates generally to an aqueous copolymer dispersions for the preparation of coatings with comprehensive improved properties in scrub resistance and composition stability.

U.S. Patent No. 6492451 discloses a relatively high PVC pigmented coating composition including an aqueous dispersion of at least one water-insoluble polymer which has phosphonate groups, as a binder. However, a higher level of scrub resistance and better formulation stability are still desired.

EP-1193298 discloses a binder composition for aqueous coatings that exhibit gloss and corrosion resistance on a metal substrate. The composition comprising an aqueous emulsion copolymer comprising ethylenically unsaturated monomer and ethylenically unsaturated stronger acid monomer, such as phosphorus containing monomers.

EP-0012949 discloses a coating composition comprising a polyfunctional monomer having at least 3 (meth)acryloyloxy groups, a (meth)acrylic acid mono or diester of polyethylene glycol, a sulphonic acid, a phosphoric acid ester, and ethanolamine.

The problem addressed by this invention is to find an improved aqueous copolymer dispersions for a high PVC coating composition which shows higher wet scrub resistance of the dry coating formed and improved stability of the corresponding formulation.

Statement of Invention

The present invention in its various aspects is as set out in the appended claims.

The present invention is directed to an aqueous copolymer dispersion, wherein said copolymer is obtained from a mixture of monomers comprising, in percentage by weight based on the dry weight of copolymer: a) 89 to 99.93% at least one ethylenically unsaturated nonionic monomer, b) 0.05 to 5% at least one ethylenically unsaturated phosphorus containing monomer without phosphonate functional group, or the salts thereof, c) 0.01 to 3% at least one ethylenically unsaturated monomer carrying at least one alkoxysilane functionality, and d) 0.01 to 3% at least one ethylenically unsaturated monomer carrying at least one functionality selected from sulfur based acids, or the salts thereof.

This invention is also directed to an aqueous coating composition comprising:

(i) at least one aqueous copolymer dispersion, said copolymer having an average particle diameter of from 50 to 350 nanometers and a glass transition temperature (Tg) of from -35°C to 60°C, wherein the copolymer is obtained from a mixture of monomers comprising, in percentage by weight based on the dry weight of copolymer: a) 92 to 99.94% at least one ethylenically unsaturated nonionic monomer, b) 0.05 to 5% at least one ethylenically unsaturated phosphorus containing monomer without phosphonate functional group, or the salts thereof, and c) 0.01 to 3% at least one ethylenically unsaturated monomer carrying at least one alkoxysilane functionality,
(ii) at least one pigment, said coating composition having a pigment volume concentration (PVC) of from 40 to 90%,
(iii) at least one coating adjuvant.

Detailed Description

The present invention is to overcome the disadvantages of the coatings of the state of the art by providing, as the core of the present invention, an aqueous copolymer dispersion specific for high PVC coating formulations with improved stability and an aqueous high PVC coating composition with a higher level of scrub resistance when being dried on metallic, ceramic, plastic, and cementitious substrates.

The first aspect of the present invention is an aqueous copolymer dispersion comprising, wherein said copolymer is obtained from a mixture of monomers comprising, in percentage by weight based on the dry weight of copolymer:

a) 89 to 99.93%, preferably 94 to 99.7%, at least one ethylenically unsaturated nonionic monomer,
b) 0.05 to 5%, preferably 0.2 to 3%, at least one ethylenically unsaturated phosphorus containing monomer without phosphonate functional group, or the salts thereof,
c) 0.01 to 3%, preferably 0.05% to 1.5%, at least one ethylenically unsaturated monomer carrying at least one alkoxysilane functionality, and
d) 0.01 to 3%, preferably 0.05 to 1.5%, at least one ethylenically unsaturated monomer carrying at least one functionality selected from sulfur based acids, or the salts thereof.

The emulsion copolymer includes at least one copolymerized ethylenically unsaturated nonionic monomer. By "nonionic monomer" herein is meant that the copolymerized monomer residue does not bear an ionic charge between pH=1-14. The ethylenically unsaturated nonionic monomers include, for example, (meth)acrylic ester monomers including methyl acrylate, ethyl acrylate, butyl acrylate, 2-ethylhexyl acrylate, decyl acrylate, lauryl acrylate, methyl methacrylate, butyl methacrylate, isodecyl methacrylate, lauryl methacrylate, hydroxyethyl methacrylate, hydroxypropyl methacrylate; (meth)acrylonitrile; (meth)acrylamide; amino-functional and ureido-functional monomers; monomers bearing acetoacetate-functional groups; styrene and substituted styrenes; butadiene; ethylene, propylene, α-olefins such as 1-decene; vinyl acetate, vinyl butyrate, vinyl versatate and other vinyl esters; and vinyl monomers such as vinyl chloride, vinylidene chloride.

The emulsion copolymer includes 0.05 to 5%, preferably 0.2 to 3%, by weight based on the dry weight of the copolymer, copolymerized ethylenically unsaturated phosphorus containing monomer without phosphonate functional group, or salts thereof. Phosphorus containing monomers include, but are not limited to, phosphoalkyl (meth)acrylates such as phosphoethyl (meth)acrylate, phosphopropyl (meth)acrylate, and phosphobutyl (meth)acrylate where (meth) acrylate designates methacrylate or acrylate; phosphoalkoxy (meth)acrylates such as phospho ethylene glycol (meth) acrylate, phospho diethylene glycol (meth)acrylate, phospho tri-ethylene glycol (meth)acrylate, phospho propylene glycol (meth)acrylate, phospho di-propylene glycol (meth)acrylate, phospho tri-propylene glycol (meth)acrylate where (meth) acrylate designates methacrylate or acrylate; phospho alkyl (meth)acrylamides such as phospho ethyl (meth)acrylamide, phospho propyl (meth)acrylamide where (meth)acrylamide designates methacrylamide or acrylamide; phosphoalkyl crotonates, phosphoalkyl maleates, phosphoalkyl fumarates, phosphodialkyl (meth)acrylates, phosphodialkyl crotonates, vinyl phosphates and (meth) allyl phosphate. Preferred is selected from phosphoalkyl (meth)acrylates or phosphoalkoxy(meth)acrylates, or the salts thereof, especially, phosphoethyl methacrylate. It is also contemplated that the copolymerized ethylenically unsaturated phosphorus containing monomer may be formed after the polymerization of at least one ethylenically unsaturated nonionic monomer and a phosphorus-capable precursor monomer. A phosphorus-capable precursor monomer is a monomer that has a reactive group that is capable, after polymerization, of reacting with a phosphorus containing compound to yield a phosphorus-containing functional group attached to the polymer. For example, a polymer containing, as a polymerized unit, hydroxyethyl methacrylate which may then be reacted, as is well known in the art, to form, for example, phosphoethyl methacrylate. Similarly, for example, a polymerized carboxylic acid unit may then be reacted, as is well known in the art, with an epoxy phosphate or an amino phosphate.

The emulsion copolymer includes 0.01 to 3%, preferably 0.05 to 1.5%, by weight based on the dry weight of the copolymer, at least one ethylenically unsaturated monomer carrying at least one alkoxysilane functionality, preferable hydrolyzable alkoxysilane functionality. This type of monomer is including but not limited to vinyltrialkoxysilanes, vinyltrimethoxysilane for example, the alkylvinyldialkoxysilanes, the (meth)acryloxyalkyltrialkoxysilanes, such as (meth)acryloxyethyltrimethoxysilane or (meth)acryloxypropyltrimethoxysilane, or their, derivatives. It is also contemplated that the silane functionality may be added after the polymerization of at least one ethylenically unsaturated nonionic monomer and an alkoxysilane-capable precursor monomer. An alkoxysilane-capable precursor monomer is a monomer that has a reactive group that is capable, after polymerization, of reacting with an alkoxysilane containing compound to yield an alkoxysilane-containing functional group attached to the polymer. For example, a copolymer containing, as a polymerized unit, as is well known in the art, an epoxy silane or an amino silane to form, for example, a silane containing copolymer.

The emulsion copolymer includes 0.01 to 3%, preferably 0.05 to 1.5%, by weight based on the dry weight of the copolymer, at least one ethylenically unsaturated monomer carrying at least one functionality selected from sulfur based acids, or the salts thereof. Examples of this monomer include, but are not limited to, vinyl- and allylsulfonic acid, vinyl-and allylsulfuric acid, sulfo ethyl (meth)acrylate, aryl sulfonic acid like styrene sulfonate or analogs of styrene sulfonates, aryl sulfuric acid like styrene sulfate or analogs of styrene sulfates, (meth)acrylamidoethanesulfonic acid, (meth)acrylamidoethanesulfuric acid, methacrylamido-2-methyl-propanesulfonic acid, methacrylamido-2-methyl-propanesulfuric acid, and the alkali metal salts of sulfonic and sulfuric acids, in particular their sodium salts, especially sodium styrene sulphonate. Polymerizable sulfur based surfactants such as Trem LF-40 from Cognis CO. or the Hitenol BC series of surfactants from DKS Co. are also included.

Preferably, the emulsion copolymer further comprises e) up to 5%, preferably 0.5 to 3%, by weight based on the dry weight of the copolymer, of at least one ethylenically unsaturated monomer carrying at least one functional group selected from carboxyl, carboxylic anhydride, hydroxyl, amide, and mixtures thereof. Examples of these types of monomers are ethylenically unsaturated carboxylic or dicarboxylic acids, especially acrylic or methacrylic acid, itaconic acid, maleic acid, or the amides, especially N-alkylolamides or hydroxyalkyl esters of the above-mentioned carboxylic acids, such as acrylamide, methacrylamide, N-methylolacrylamide, N-methylolmethacrylamide, 2-hydroxyethylacrylamide, 2-hydroxyethylmethacrylamide, hydroxyethyl acrylate, hydroxyethyl methacrylate, hydroxypropyl acrylate and hydroxypropyl methacrylate. Preferred is 0.5 to 3%, by weight based on the dry weight of the copolymer, copolymerized ethylenically unsaturated carboxylic acid monomers.

In one preferable embodiment of the present invention the emulsion copolymer contains monomers, by weight based on the dry weight of the copolymer,

a) 95.65 to 97.61% at least one ethylenically unsaturated nonionic monomer selected from (meth)acrylate, styrene and their derivatives,

b) 0.05 to 1.96% at least one ethylenically unsaturated phosphate functionality containing monomer,

c) 0.01 to 0.2% at least one ethylenically unsaturated monomer carrying alkoxysilane functionality,

d) 0.15 to 0.4% at least one ethylenically unsaturated monomer carrying at least one functionality selected from sulfur based acids, or the salts thereof, and

e) 0 to 2.5% at least one ethylenically unsaturated monomer carrying carboxyl or amide functional group.

The summation of the monomers' percentage in the emulsion copolymer is 100%. When there is selective component in the copolymer, other components may reduce their scale by lower the upper limit.

The term "up to" in a range means any and all amounts greater than zero and through to and including the end point of the range.

In one embodiment of the present invention the emulsion copolymer contains no monomer carrying functional group of carboxyl, carboxylic anhydride, hydroxyl, amide, or mixtures thereof. This copolymer shows higher level of scrub resistance in coating membrane and only needs slightly more surfactant to achieve acceptable divalent ion stability as compared to those containing carboxyl, carboxylic anhydride, hydroxyl, amide, and mixtures thereof..

Alternatively, the total amounts of component d) and e) are in the range of 0.05 to 4.5%, by weight based on the dry weight of the copolymer. Higher level of d) and e) may lead to reduction in scrub resistance.

Within the monomers mentioned above, any monomer that falls in category b), c), d) or e) does not fall in category a).

Sometimes, the aqueous emulsion copolymer may contain up to 5%, preferably 0.5 to 3%, especially 1.0 to 2.5%, by weight based on the dry weight of the copolymer, copolymerized multi-ethylenically unsaturated monomers such as, for example, allyl methacrylate, diallyl phthalate, 1,4-butylene glycol dimethacrylate, 1,2-ethylene glycol dimethacrylate, 1,6-hexanediol diacrylate, and divinyl benzene. Preferred is the use of no copolymerized multi-ethylenically unsaturated monomers.

The glass transition temperature (Tg) of the emulsion copolymer is from - 35 °C to 60 °C, preferably from -15 °C to 40 °C, and more preferably from -10 °C to 30 °C. Tgs used herein are those calculated by using the Fox equation (T.G. Fox, Bull. Am. Physics Soc., Volume 1, Issue No. 3, page 123(1956)). That is, for calculating the Tg of a copolymer of monomers M1 and M2,

$$\frac{1}{T_g(calc.)} = \frac{w(M_1)}{T_g(M_1)} + \frac{w(M_2)}{T_g(M_2)},$$

wherein Tg(calc.) is the glass transition temperature calculated for the copolymer, w(M1) is the weight fraction of monomer M1 in the copolymer, w(M2) is the weight fraction of monomer M2 in the copolymer, Tg(M1) is the glass transition temperature of the homopolymer of M1, and Tg(M2) is the glass transition temperature of the homopolymer of M2, all temperatures being in K. The glass transition temperatures of homopolymers may be found, for example, in "Polymer Handbook", edited by J. Brandrup and E.H. Immergut, Interscience Publishers.

The polymerization techniques used to prepare aqueous emulsion copolymers are well known in the art. In the emulsion polymerization process conventional surfactants may be used such as, for example, anionic and/or nonionic emulsifiers such as, for example, alkali metal or ammonium salts of alkyl, aryl, or alkylaryl sulfates, sulfonates or phosphates; alkyl sulfonic acids; sulfosuccinate salts; fatty acids; ethylenically unsaturated surfactant monomers; and ethoxylated alcohols or phenols. The amount of surfactant used is usually 0.1% to 6% by weight, based on the weight of monomer. Either thermal or redox initiation processes may be used. The reaction temperature is maintained at a temperature lower than 100 °C throughout the course of the reaction. Preferred is a reaction temperature between 30 °C and 95 °C, more preferably between 50 °C and 90 °C. The monomer mixture may be added neat or as an emulsion in water. The monomer mixture may be added in one or more additions or continuously, linearly or not, over the reaction period, or combinations thereof.

Conventional free radical initiators may be used such as, for example, hydrogen peroxide, sodium peroxide, potassium peroxide, t-butyl hydroperoxide, cumene hydroperoxide, ammonium and/or alkali metal persulfates, sodium perborate, perphosphoric acid and salts thereof, potassium permanganate, and ammonium or alkali metal salts of peroxydisulfuric acid, typically at a level of 0.01°/ to 3.0% by weight, based on the weight of total monomer. Redox systems using the same initiators coupled with a suitable reductant such as, for example, sodium sulfoxylate formaldehyde, ascorbic acid, isoascorbic acid, alkali metal and ammonium salts of sulfur-containing acids, such as sodium sulfite, bisulfite, thiosulfate, hydrosulfite, sulfide, hydrosulfide or dithionite, formadinesulfinic acid, hydroxymethanesulfonic acid, acetone bisulfite, amines such as ethanolamine, glycolic acid, glyoxylic acid hydrate, lactic acid, glyceric acid, malic acid, tartaric acid and salts of the preceding acids may be used. Redox reaction catalyzing metal salts of iron, copper, manganese, silver, platinum, vanadium, nickel, chromium, palladium, or cobalt may be used. Chelating agents for the metals may optionally be used.

Chain transfer agents such as, for example, halogen compounds such as tetrabromomethane; allyl compounds; or mercaptans such as alkyl thioglycolates, alkyl mercaptoalkanoates, and C4-C22 linear or branched alkyl mercaptans may be used to lower the molecular weight of the emulsion polymer and/or to provide a different molecular weight distribution than would otherwise have been obtained with any free-radical-generating initiator(s). Chain transfer agent (s) may be added in one or more additions or continuously, linearly or not, over most or all of the entire reaction period or during limited portion(s) of the reaction period such as, for example, in the kettle charge and in the reduction of residual monomer stage. Chain transfer agent are typically used in the amount of 0 to 5 wt%, based on the total weight of monomer used to form the aqueous emulsion copolymer. A preferred level of chain transfer agent is from 0.01 to 0.5, more preferably from 0.02 to 0.4 and most preferably from 0.05 to 0. 2 mole%, based on the total number of moles of monomer used to form the aqueous emulsion copolymer

In another embodiment of the present invention the aqueous emulsion polymer may be prepared by a multistage emulsion polymerization process, in which at least two stages differing in composition are polymerized in sequential fashion. Such a process sometimes results in the formation of at least two mutually incompatible polymer compositions, thereby resulting in the formation of at least two phases within the polymer particles. Such particles are composed of two or more phases of various geometries or morphologies such as, for example, core/shell or core/sheath particles, core/shell particles with shell phases incompletely encapsulating the core, core/shell particles with a multiplicity of cores, and interpenetrating network particles. In all of these cases the majority of the surface area of the particle will be occupied by at least one outer phase and the interior of the particle will be occupied by at least one inner phase. Each of the stages of the multi-staged emulsion polymer may contain the same monomers, surfactants, chain transfer agents, etc. as disclosed herein-above for the emulsion polymer. In the case of a multi-staged polymer particle the Tg for the purpose of this invention is to be calculated by the Fox equation as detailed herein using the overall composition of the emulsion polymer without regard for the number of stages or phases therein. Similarly, for a multi-staged polymer particle the amount of the monomers shall be determined from the overall composition of the emulsion polymer without regard for the number of stages or phases therein. For example, the first stage composition primarily comprises of styrene and the second stage comprises of the composition described by this invention. Furthermore, the core of the copolymer particle may be hollow (i.e., air void). The polymerization techniques used to prepare such multistage emulsion polymers are well known in the art such as, for example, US Patents No. 4,325,856; 4,654,397; and 4,814,373. A preferred multistage emulsion polymer contains monomer b) in only one of the stages.

The average particle diameter of the emulsion copolymer particles is from 50 to 350 nanometers, preferably from 50 to 300 nanometers, as measured by a BI-90 Particle Sizer. Without being bound by a particular theory, it is believed that lower particle sizes lead to greater emulsion copolymer shear instability and that larger particle sizes lead to lower binding capacity and therefore lower scrub resistance.

In one embodiment the aqueous coating composition is substantially free of water-soluble phosphorous acid compounds such as may be achieved by purification of the phosphorus containing monomer, of the aqueous emulsion copolymer, of the aqueous coating composition, or of more than one of the foregoing.

The aqueous emulsion copolymer may be prepared by a process at a pH of less than 2 as is disclosed in US 20030236374.

The second aspect of the invention is an aqueous coating composition comprising:

(i) at least one aqueous copolymer dispersion, said copolymer having an average particle diameter of from 50 to 350 nanometers and a glass transition temperature (Tg) of from-35 °C to 60 °C, wherein said copolymer is obtained from a mixture of monomers comprising, in percentage by weight based on the dry weight of copolymer: a) 92 to 99.94% at least one ethylenically unsaturated nonionic monomer, b) 0.05 to 5% at least one ethylenically unsaturated phosphorus containing monomer without phosphonate functional group, or the salts thereof, and c) 0.01 to 3% at least one ethylenically unsaturated monomer carrying at least one alkoxysilane functionality,

(ii) at least one pigment, said coating composition having a pigment volume concentration (PVC) of from 40 to 90%,

(iii) at least one coating adjuvant.

Preferably, the mixture of monomers further comprises: d) up to 3%, in percentage by weight based on the dry weight of copolymer, preferably 0.01 to 3%, of at least one ethylenically unsaturated monomer carrying at least one functionality selected from sulfur based acids, or the salts thereof.

Also preferably, the mixture of monomers further comprises: e) up to 5%, in percentage by weight based on the dry weight of copolymer, of at least one ethylenically unsaturated monomer carrying at least one functional group selected from carboxyl, carboxylic anhydride, hydroxyl, amide, and mixtures thereof.

The monomers a), b), c), d) and e) herein include respectively categories of polymerizable ethylenically unsaturated monomers which are the same as those defined in above description of the first aspect of the invention. The differences of these monomers from those in the first aspect of the invention are only in the percentage by weight that used.

Preferably, the aqueous coating compositions use the copolymer described in the first aspect of the invention as a binder.

Above said aqueous coating composition comprises at least one pigment. The aqueous coating composition may optionally contain extender(s). The aqueous coating composition has a PVC of from 40 to 90%, preferably of from 65 to 90%. The PVC is calculated by the following formula:

$$PVC(\%) = \frac{\text{volume of pigment(s)} + \text{volume extender(s)}}{\text{total dry volume of paint}}$$

By "pigment" herein is meant a particulate inorganic material which is capable of materially contributing to the opacity or hiding capability of a coating. Such materials typically have a refractive index of greater than 1.8 and include, for example, titanium dioxide, zinc oxide, zinc sulfide, and the like. Preferred is titanium dioxide. By "extender" herein is meant a particulate inorganic material having a refractive index of less than or equal to 1.8 and greater than 1.3 and includes, for example, calcium carbonate, clay, calcium sulfate, aluminosilicates, silicates, zeolites, and diatomaceous earth. The aqueous coating composition may optionally contain solid or voided copolymer particles having a Tg of greater than 60 °C, said copolymer particles not including, as copolymerized units, phosphate monomer; such copolymer particles are classified as extenders for purposes of PVC calculations herein.

The copolymer compositions described in this invention in both polymer composition and coating composition sections demonstrate significant advantage of scrub resistance as compared to conventional copolymer compositions not used in a PVC range of 40% to 90% as in this invention. When PVC is greater than 90%, it is difficult to achieve an acceptable mechanical integrity of dried coatings; when PVC is lower than 40%, the copolymer compositions in this invention can be used but show no advantage over conventional copolymers not mentioned in this invention.

The aqueous coating composition above can be used for coating of a substrate, the coating method comprising:

(1) forming an aqueous coating composition described in the second aspect of the invention;
(2) applying said aqueous composition to a substrate; and
(3) drying, or allowing to dry, said aqueous composition.

The aqueous coating composition of this invention is contemplated to encompass coating or paint compositions which may be described in the art as low gloss or flat coatings, primers, textured coatings, and the like. The aqueous coating composition is prepared by techniques which are well known in the coatings art. First, optionally, at least one pigment is well dispersed in an aqueous medium under high shear such as is afforded by a COWLES mixer or, in an alternative, at least one predispersed pigment may be used. Then the aqueous emulsion copolymer is added under low shear stirring along with other coatings adjuvants, as desired. Alternatively, the aqueous emulsion copolymer may be included in the optional pigment dispersion step. The aqueous composition may contain conventional coatings adjuvants such as, for example, tackifiers, emulsifiers, coalescing agents such as for example, Texanol™ (Eastman Chemical Co.), cosolvents such as, for example, glycols and glycol ethers, buffers, neutralizers, thickeners or rheology modifiers, humectants, wetting agents, biocides, plasticizers, antifoaming agents, colorants, waxes, and anti-oxidants.

The aqueous coating composition, in addition to the aqueous emulsion copolymer described herein, may also contain one or more additional copolymers, preferably additional emulsion copolymers, not containing phosphate monomer as a copolymerized unit; such additional copolymers may be present at a level of up to 200%, by weight based on the weight of the aqueous emulsion copolymer. In one such embodiment the aqueous coating composition includes, for example, from 40 to 70 wt% of the aqueous emulsion copolymer described hereinabove having an average particle diameter of from 50 to 350 nanometers and from 30 to 60 wt% of a second emulsion copolymer having an average particle diameter of from 50 to 350 nanometers copolymer and wherein said copolymer is obtained from a mixture of monomers comprising, in percentage by weight based on the dry weight of copolymer: a) 92 to 99.94% at least one ethylenically unsaturated nonionic monomer, b) 0.05 to 5% at least one ethylenically unsaturated phosphorus containing monomer without phosphonate functional group, or salts thereof, and c) 0.01 to 3% at least one ethylenically unsaturated monomer carrying at least one alkoxysilane functionality. Perferably, said copolymer further comprises d) up to 3%, in percentage by weight based on the dry weight of copolymer, of at least one ethylenically unsaturated monomer carrying at least one functionality selected from sulfur based acids, or the salts thereof. Also preferably, e) up to 5%, in percentage by weight based on the dry weight of copolymer, of at least one ethylenically unsaturated monomer carrying at least one functional group selected from carboxyl, carboxylic anhydride, hydroxyl, amide, and mixtures thereof.

The solids content of the aqueous coating composition may be from about 10% to about 70% by volume. The viscosity of the aqueous composition may be from 0.05 to 10 Pa.s (50 cps to 10,000 cps), as measured using a Brookfield viscometer; the viscosities appropriate for different application methods vary considerably.

The aqueous composition may be applied by conventional application methods such as, for example, brushing, roller application, and spraying methods such as, for example, air-atomized spray, air-assisted spray, airless spray, high volume low pressure spray, and air-assisted airless spray.

In the method of this invention the aqueous coating composition is applied to a substrate such as, for example, plastic, wood, metal, primed surfaces, previously painted surfaces, and cementitious substrates. The aqueous coating composition coated on the substrate is typically dried, or allowed to dry, at a temperature of from 1 °C to 95 °C.

Examples

I. Raw Materials

| A) Starting materials used in making Latex compound | |
|---|---|
| Compound | Chemical Nature |
| BA | Butyl Acrylate |
| 2-EHA | 2-Ethylhexyl Acrylate |
| ST | Styrene |
| MMA | Methyl Methacrylate |
| (M)AA | (Meth)acrylic Acid |
| PEM | Phosphoethyl methacrylate (60% active) |
| PAM 100 | Phosphoethyl ethoxylated methacrylate |
| SSS | Sodium styrene sulfonate |
| AMPS | Sodium-2-acrylamido-2-methylpropane sulfonic acid |
| A-171 | Vinyl trimethoxysilane |
| MATS | Methacryloxypropyltrimethoxysilane |
| AM | Acrylamide |
| APS | Ammonium persulfate |
| EDTA | Ethylenediaminetetraacetic acid |
| SBS | Sodium bisulfite |
| DBS | sodium dodecyl benzene sulfonate |
| FA-40 | fatty alcohol ethoxylate EO: 40 |
| MIT | 2-Methyl-4-isothiazolin-3-one |
| NXZ™ | Biocide |

| B) Starting materials used in paint formulation | | | |
|---|---|---|---|
| Material | Function | Chemical nature | Supplier |
| Kathon™ LXE | Biocide | Methyl- and chloroisothiazolinone | Rohm and Haas |
| Natrosol™ 250 HBR | Thickener | Hydrophobic modified cellulose | Aqualon |
| Ethylene Glycol | Solvent | Ethylene glycol | |

(continued)

| B) Starting materials used in paint formulation | | | |
|---|---|---|---|
| Material | Function | Chemical nature | Supplier |
| AMP-95 | Base | 2-methyl-2-amino-propanol | Dow |
| Orotan™ 1288 | Pigment dispersant | Polyacid | Rohm and Haas |
| Triton™ CF-10 | Wetting agent | Nonionic surfactant | Union Carbide |
| Dispalair™ CF-246 | Defoamer | | Blackburn Chemicals |
| Ti-Pure™ R-902 | Pigment | Titanium dioxide | DuPont |
| CC-700 | Extender | Calcium carbonate | Guangfu Building Materials Group (China) |
| CC-1000 | Extender | Calcium carbonate | Guangfu Building Materials Group (China) |
| ASP-170 | Extender | Delaminated clay | Engelhard |
| DB-80 | Extender | Calcined clay | Jinyang Gaoling Lt. |
| Texanol™ | Coalescent | Trimethylpentanediol isobutyrate | Eastman |

II. Test Procedures

Divalent Ion Stability of Latices

The latex divalent ion stability was evaluated using the Chinese national standard test method. To test the divalent ion stability of a given latex, 6 ml of 0.5wt% CaCl2 solution was added into 60 ml latex and the mixture was stirred for a certain period of time to form a uniform dispersion. The mixture dispersion was allowed to stay still on bench for 48 hr prior to observation. A latex without forming flocculation, particle, and phase separation after test is considered as "pass". For the latices that failed the test, certain levels of post-add surfactants were added to help them to pass the divalent ion stability. A lower level of post-add surfactant indicates a better divalent ion stability. Two types of surfactants were used here as post-add: anionic surfactant, RhodafacTM RS-710 (Rhodia); nonionic surfactant, TergitolTM 15-S-40 (Dow).

Wet-Scrub Resistance of Dry Coatings

The scrub resistance of paints is determined using a modified version of the ASTM Test Method D 2486-74A. As compared to the standard ASTM method, there are four modifications in the test method used here. First, the scrub medium for the paints with PVC greater than 55% used is a 0.5wt% household detergent solution but the abrasive scrub medium was used for the paints with fewer pigments. Second, the coating films were laid down on vinyl charts vertical to the longer side. Third, there are no shims on the aluminum metal plates of scrub machines. The last difference is the material used for making the hairs of the test brush. The brushes used here were made of pig hairs rather than nylon fibers. On each vinyl chart, four coatings were applied with always making one of them derived from the same paint as control and three others being samples so that relative ratings between control and samples can be obtained. For a given paint, four coating specimens were made and the final rating was obtained by averaging the results of the four specimens. The coatings were dried for 7 days in a constant temperature room with a temperature of 25oC and a humidity of 50% prior to scrub test.

Formulation Stability of Aqueous Coating Compositions

To evaluate the formulation stability of the aqueous coating compositions, two types of the Stormer viscosity changes of several coating compositions were measured: long term ΔStormer viscosity = Stormer viscosity after equilibration for 20 days - initial Stormer viscosity; H/A ΔStormer viscosity = Stormer viscosity after heat aging for 10 days - initial Stormer viscosity. A smaller ΔKU indicates better formulation stability.

Example 1: Preparation of Aqueous Emulsion Copolymers

Latex 1

A monomer emulsion is prepared by combining 643 g BA, 858 g ST, 30.4 g AA, 5.6 g SSS, 456 g DI Water, and 64.26 g of a 22.5% by wt aqueous solution of DBS, and emulsifying with stirring. Next, 14.11 g of a 22.5% by wt aqueous solution of DBS and 563 g DI water are charged to a five liter multi-neck flask fitted with mechanical stirring. The contents of the flask are heated to 90 °C under a nitrogen atmosphere. To the stirred flask, 52.4 g of the monomer emulsion, 1.91 g $Na_2CO_3$ in 35.4 g DI water, 0.02 g ferrous sulfate and 0.19 g EDTA are added followed by 5.46 g APS in 15.6 g DI water. The remaining monomer emulsion and a solution of 2.2 g APS in 60 g DI water and 2.34 g SBS in 60 g DI water are then added to the flask over 180 minutes. Reactor temperature is maintained at 87 °C. Next, 26 g DI water is used to rinse the emulsion feed line to the reactor. After cooling the contents of the reactor 3.85 mg of ferrous sulfate, 4.61 g of t-butyl hydroperoxide (70% aq.), and 2.31 g of isoascorbic acid in aqueous solutions are added to the flask. The contents of the flask are neutralized to a pH of 7.0 to 9.0 with ammonium hydroxide, sodium hydroxide or potassium hydroxide, or other non-volatile bases for low odor. To the cooled batch, 32.8 g FA-40 in 32.5 g DI water are added to the flask and rinse with 32.5 g DI water. Then 3.48 g MIT in 17.4 g DI water are added to the flask followed by 0.22 g NXZ™ (Cognis). The calculated Tg of the copolymer is 30°C.

Latex 2 and Latex 3

The same process as for Latex 1 with, nevertheless, variations in amounts and in nature of monomers based on Table 1 were used to make Latex 2 and Latex 3. In addition, the buffer solution was not used in the process for Latex 2.

Latex 4 to Latex 15, Latex 17 to Latex 20 and Latex 22 to Latex 24

The same process as for Latex 2 with, nevertheless, variations in amounts and in nature of monomers based on Table 1, was used to make Latex 4 to Latex 15, Latex 17 to Latex 20 and Latex 22 to Latex 24.

Latex 16 and Latex 21

The same process as for Latex 2 with, nevertheless, variations in amounts and in nature of monomers based on Table 1 and difference in kettle soap level, was used to make Latex 16 and Latex 21. The kettle soap level used for making Latex 16 is 28g and for Latex 21 is 14.5g.
Latex 1 to Latex 4, and Latex 24 are outside the invention.

Table 1

| | Copolymer composition | | | | | | Latex characteristics | | | |
|---|---|---|---|---|---|---|---|---|---|---|
| Latex ID | ST or MMA* | BA or EHA* | AA or MAA* or AM** | PEM or PAM-100* | A-171 or MATS* | SSS or AMPS* | WS[a] (%) | PS[b] (nm) | pH[c] | $T_g$[d] (°C) |
| 1 | 55.89 | 41.85 | 1.96 | 0 | 0 | 0.30 | 48.8 | 127 | 8.95 | 15.0 |
| 2 | 55.86 | 41.85 | 0 | 1.96 | 0 | 0.33 | 48.72 | 115 | 8.29 | 15.2 |
| 3 | 55.76 | 41.85 | 1.96 | 0 | 0.08 | 0.35 | 47.6 | 109 | 8.89 | 15.3 |
| 4 | 54.84 | 41.85 | 2.0 | 1.0 | 0 | 0.31 | 48.36 | 107 | 8.5 | 15.3 |
| 5 | 55.76 | 41.85 | 0 | 1.96 | 0.13 | 0.30 | 48.22 | 111 | 8.6 | 15.2 |
| 6 | 53.80 | 41.85 | 1.96 | 1.96 | 0.13 | 0.30 | 48.43 | 114 | 8.83 | 15.3 |
| 7 | 54.80 | 41.83 | 1.96 | 0.98 | 0.1 | 0.33 | 50.03 | 114 | 8.77 | 15.3 |
| 8 | 54.98 | 41.83 | 1.96 | 0.98 | 0.1 | 0.15 | 48.5 | 116 | 8.53 | 15.0 |
| 9 | 54.77 | 41.85 | 2.25 | 0.75 | 0.1 | 0.28 | 49.12 | 115 | 8.39 | 15.3 |
| 10 | 54.80 | 41.83 | 1.96 | 0.98 | 0.2* | 0.33 | 47.6 | 103 | 8.67 | 15.3 |
| 11 | 54.80 | 41.83 | 1.96 | 0.98* | 0.1 | 0.33 | 49.3 | 116 | 8.57 | 15.3 |
| 12 | 54.70 | 41.85 | 2.5 | 0.5 | 0.07 | 0.38 | 49.17 | 116 | 8.52 | 15.3 |
| 13 | 60.57 | 36.0* | 2.0 | 1.0 | 0.1 | 0.33 | 47.25 | 117 | 8.39 | 2.5 |
| 14 | 54.70* | 41.85 | 2.0 | 1.0 | 0.12 | 0.33 | 48.4 | 108 | 8.41 | 16.9 |
| 15 | 54.73 | 41.83 | 1.96 | 0.98 | 0.1 | 0.40 | 48.1 | 105 | 8.52 | 15.0 |

(continued)

| | Copolymer composition | | | | | | Latex characteristics | | | |
|---|---|---|---|---|---|---|---|---|---|---|
| Latex ID | ST or MMA* | BA or EHA* | AA or MAA* or AM** | PEM or PAM-100* | A-171 or MATS* | SSS or AMPS* | WS$^a$ (%) | PS$^b$ (nm) | pH$^c$ | T$_g$$^d$ (°C) |
| 16 | 50.70 | 45.85 | 2.0 | 1.0 | 0.1 | 0.35 | 45.19 | 84 | 8.56 | 9.1 |
| 17 | 71.61 | 26.0 | 2.0 | 0.05 | 0.01 | 0.33 | 49.78 | 141 | 8.81 | 42.4 |
| 18 | 54.77 | 41.85 | 2.0 | 1.0 | 0.05 | 0.33 | 47.94 | 108 | 8.59 | 15.3 |
| 19 | 54.85 | 41.83 | 1.96 | 0.98 | 0.1 | 0.28* | 49.0 | 118 | 8.74 | 15.0 |
| 20 | 54.63 | 41.85 | 2.0 | 1.0 | 0.15 | 0.37 | 48.04 | 109 | 8.6 | 15.3 |
| 21 | 54.79 | 41.85 | 2.0 | 1.0 | 0.1 | 0.26 | 49.83 | 158 | 8.66 | 15.3 |
| 22 | 54.8 | 41.9 | 2.0* | 0.98 | 0.1 | 0.33 | 50.09 | 113 | 8.77 | 16.0 |
| 23 | 55.7 | 41.8 | 1.0** | 1.0 | 0.1 | 0.33 | 47.37 | 113 | 8.33 | 15.5 |
| 24 | 55.05 | 41.85 | 2.0 | 1.0 | 0.1 | 0 | 47.75 | 125 | 8.58 | 15.2 |

a: WS = weight solids b: PS = particle size c: pH = pH of the latex after neutralization d: T$_g$ = the calculated glass transition temperature of copolymers using the Fox equation

Example 2: Preparation of Aqueous Coating Compositions

Paint 1

A paint containing aqueous emulsion copolymer Latex 1 with 1.5 wt % Tergitol™ 15-S-40 based on copolymer solids was prepared using the following procedure to form the aqueous coating composition Paint 1. The ingredients listed in Table 2 (grind) were mixed using a high speed Cowles disperser. The ingredients listed in Table 2 (let down) were added using a conventional lab mixer. The PVC of the resulting paints is 78%. The volume solids of the resulting paint is 32.5%.

Paint 2 to Paint 24

Paint 2 to Paint 24 (containing Latex 2 to Latex 24 with certain level of surfactants for passing Ca$^{2+}$ test) were prepared following the procedure for preparation of Paint 1. Paint 3 contains Latex 3 without post-add surfactants. Appropriate adjustment of water and binder weights were done such that the resulting paints have a volume solid of 32.5% and a PVC of 78%.

Paint 1 to Paint 4 are outside this invention.

Table 2 78 PVC Aquesous Coating Composition

| Paint formulation | |
|---|---|
| Material | Weight(g) |
| Grind | |
| Water | 372.0 |
| Ethylene glycol | 7.0 |
| Natrosol™ 250 HBR | 6.0 |
| AMP-95 | 0.5 |
| Orotan™ 1288 | 4.0 |
| Triton™ CF-10 | 1.0 |
| Dispelair™ CF-246 | 1.0 |
| Ti-Pure™ R-902 | 55.0 |

(continued)

| Paint formulation | |
|---|---|
| Material | Weight(g) |
| CC-700 | 160.0 |
| CC-1000 | 115.0 |
| ASP-170 | 100.0 |
| DB-80 | 60.0 |
| Letdown | |
| Latex 1 | 110.0 |
| Dispelair™ CF-246 | 0.30 |
| Texanol™ | 10.0 |
| Water | 17.2 |
| Total | 1019 |
| Paint characteristics | |
| Total PVC | 78% |
| Volume solids | 32.5% |
| Weight solids | 53.4% |

Paint 25

A paint containing aqueous emulsion polymer Latex 1 with 1.5%wt Tergitol™ 15-S-40 based on polymer solids was prepared using the following procedure to form the aqueous coating composition Paint 25. The ingredients listed in Table 3 (grind) were mixed using a high speed Cowles disperser. The ingredients listed in Table 3(let down) were added using a conventional lab mixer. The PVC of the resulting paints is 55%. The volume solids of the resulting paint is 32.3%.

Table 3 55PVC Aqueous Coating Composition

| Paint formulation | |
|---|---|
| Material | Weight(g) |
| Grind | |
| Water | 281.0 |
| Ethylene glycol | 5.5 |
| Natrosol™ 250 HBR | 4.5 |
| AMP-95 | 0.4 |
| Orotan™ 1288 | 3.0 |
| Triton™ CF-10 | 0.75 |
| Dispelair™ CF-246 | 0.75 |
| Ti-Pure™ R-902 | 41.5 |
| CC-700 | 121.0 |
| CC-1000 | 87.0 |
| ASP-170 | 75.5 |
| DB-80 | 45.5 |
| Letdown | |

(continued)

| Paint formulation | |
|---|---|
| Material | Weight(g) |
| Latex 1 | 250.0 |
| Dispelair™ CF-246 | 0.25 |
| Texanol™ | 22.0 |
| Water | 62.35 |
| Total | 1000 |
| Paint characteristics | |
| Total PVC | 55% |
| Volume solids | 32.3% |
| Weight solids | 49.1% |

Paint 26

Paint 26 (containing Latex 7 with certain level of surfactants for passing $Ca^{2+}$ test) was prepared following the procedure for preparation of Paint 25. Appropriate adjustment of water and binder weights were done such that the resulting paint has a volume solid of 32.3% and a PVC of 55%.

Paint 27

A paint containing aqueous emulsion polymer Latex 1 with 1.5%wt Tergitol™ 15-S-40 based on polymer solids was prepared using the following procedure to form the aqueous coating composition Paint 27. The ingredients listed in Table 4 (grind) were mixed using a high speed Cowles disperser. The ingredients listed in Table 4(let down) were added using a conventional lab mixer. The PVC of the resulting paints is 90%. The volume solids of the resulting paint is 32.3%.

Table 4 90PVC Aqueous Coating Composition

| Paint formulation | |
|---|---|
| Material | Weight(g) |
| Grind | |
| Water | 400.0 |
| Ethylene glycol | 7.5 |
| Natrosol™ 250 HBR | 6.45 |
| AMP-95 | 0.55 |
| Orotan™ 1288 | 4.3 |
| Triton™ CF-10 | 1.0 |
| Dispelair™ CF-246 | 1.0 |
| Ti-Pure™ R-902 | 59.0 |
| CC-700 | 172.0 |
| CC-1000 | 123.0 |
| ASP-170 | 107.5 |
| DB-80 | 64.5 |
| Letdown | |
| Latex 1 | 48.5 |

(continued)

| Paint formulation | |
|---|---|
| Material | Weight(g) |
| Dispelair™ CF-246 | 0.3 |
| Texanol™ | 4.3 |
| Water | 0.1 |
| Total | 1000 |
| Paint characteristics | |
| Total PVC | 90% |
| Volume solids | 32.1% |
| Weight solids | 55% |

Paint 28

Paint 28 (containing example Latex 7 with certain level of surfactants for passing Ca$^{2+}$ test) was prepared following the procedure for preparation of Paint 27. Appropriate adjustment of water and binder weights were done such that the resulting paint has a volume solid of 32.1% and a PVC of 90%.

Paint 29

A paint containing aqueous emulsion polymer Latex 1 with 1.5%wt Tergitol™ 15-S-40 based on polymer solids was prepared using the following procedure to form the aqueous coating composition Paint 29. The ingredients listed in Table 5 (grind) were mixed using a high speed Cowles disperser. The ingredients listed in Table 5(let down) were added using a conventional lab mixer. The PVC of the resulting paints is 90%. The volume solids of the resulting paint is 35%.

Table 5 40PVC Aqueous Coating Composition

| Paint formulation | |
|---|---|
| Material | Weight(g) |
| Grind | |
| Water | 80.00 |
| Propylene Glycol | 33.00 |
| Orotan™ 1288 | 5.50 |
| Triton™ CF-10 | 1.00 |
| Drewplus L-475 | 1.00 |
| Ti-pure R-706 | 160.00 |
| DB-80 | 69.00 |
| CC-500 | 71.00 |
| Celite 499 | 30.00 |
| | |
| Letdown | |
| Latex 1 | 355.74 |
| Texanol | 31.77 |
| Acrysol™ RM-2020NPR | 9.65 |
| Acrysol™ TT-935 | 5.13 |

(continued)

| Paint formulation | |
|---|---|
| Material | Weight(g) |
| AMP-95 | 1.43 |
| Water | 145.78 |
| Total | 1000.00 |
| Paint characteristics | |
| Total PVC | 40% |
| Volume solids | 35% |
| Weight solids | 50.65% |

Paint 30

Paint 30 (containing Latex 7 with certain level of surfactants for passing $Ca^{2+}$ test) was prepared following the procedure for preparation of Paint 29. Appropriate adjustment of water and binder weights were done such that the resulting paint has a volume solid of 35% and a PVC of 40%.
Paint 25, Paint 27, and Paint 29 are outside of this invention.

III. Results of Aqueous Emulsion Copolymers and Aqueous Coating Compositions

Table 6 lists the properties of all latexes and the properties of Paint 1 to Paint 24.

Table 6

| Latex properties | | | Paint properties | | | |
|---|---|---|---|---|---|---|
| | Ca²⁺ Stability | | | | | |
| Latex ID | Rhodafac™ RS-710 (wt%)[a] | Tergitol™ 15-S-40 (wt%)[a] | Corresponding Paint ID | Relative Scrub Resistance (%) | Long Term ΔStormer Viscosity (KU)[b] | H/A ΔStormer Viscosity (KU)[c] |
| 1 | - | - | 1 | 100 | - | -3 |
| 2 | 1.5 | 1.5 | 2 | 225 | 17 | >38 |
| 3 | - | - | 3 | 166 | - | - |
| 4 | 0 | 0.5 | 4 | 213 | - | - |
| 5 | 1.5 | 1.5 | 5 | 325 | 14 | 21 |
| 6 | 0 | 1.5 | 6 | 241 | - | - |
| 7 | 0 | 0.5 | 7 | 251 | 8 | 16 |
| 8 | 0 | 1.0 | 8 | 260 | - | - |
| 9 | 0 | 0 | 9 | 236 | - | 9 |
| 10 | 0 | 0.5 | 10 | 250 | - | - |
| 11 | 0 | 0.6 | 11 | 245 | - | - |
| 12 | 0 | 0 | 12 | 230 | - | 3 |
| 13 | 0 | 0.5 | 13 | 246 | - | - |
| 14 | 0 | 0.5 | 14 | 196 | - | - |
| 15 | 0 | 0.3 | 15 | 225 | | |
| 16 | 0 | 1.0 | 16 | 234 | - | - |
| 17 | 0 | 0.5 | 17 | 219 | - | - |

(continued)

| Latex properties | | | Paint properties | | | |
|---|---|---|---|---|---|---|
| Latex ID | Ca²⁺ Stability | | Corresponding Paint ID | Relative Scrub Resistance (%) | Long Term ΔStormer Viscosity (KU)[b] | H/A ΔStormer Viscosity (KU)[c] |
| | Rhodafac™ RS-710 (wt%)[a] | Tergitol™ 15-S-40 (wt%)[a] | | | | |
| 18 | 0 | 0.5 | 18 | 230 | - | - |
| 19 | 0 | 0.6 | 19 | 245 | | |
| 20 | 0 | 0.5 | 20 | 253 | - | - |
| 21 | 0 | 0 | 21 | 217 | - | - |
| 22 | 1.5 | 1.5 | 22 | 225 | - | - |
| 23 | 1.5 | 1.5 | 23 | 251 | - | - |
| 24 | 0 | 1.5 | 24 | 281 | - | - |
| a: Based on copolymer solids b: Long Term ΔStormer Viscosity = Stormer viscosity after equilibration for 20 days - initial Stormer viscosity c: H/A ΔStormer Viscosity = Stormer viscosity after heat aging for 10 days - initial Stormer viscosity "-" means no data available | | | | | | |

The results in the above table indicate that the scrub resistance of dry coatings decreases as latex particle size increases. Removing SSS from emulsion copolymer results in less stable latex and coating composition. A good balance of scrub resistance and stability is necessary for coating compositions.

Table 7 lists the properties of Paint 25 to Paint 30.

Table 7

| Paint ID | PVC (%) | Relative Scrub Resistance (%) |
|---|---|---|
| 25 | 55 | 100 |
| 26 | 55 | 114 |
| 27 | 90 | 100 |
| 28 | 90 | 210 |
| 29 | 40 | 100 |
| 30 | 40 | 178 |

**Claims**

1. An aqueous coating composition comprising: (i) at least one aqueous copolymer dispersion, said copolymer having an average particle diameter of from 50 to 350 nanometers and a glass transition temperature (Tg) of from-35°C to 60°C, wherein said copolymer is obtained from a mixture of monomers comprising, in percentage by weight based on the dry weight of copolymer: a) 92 to 99.94% at least one ethylenically unsaturated nonionic monomer, b) 0.05 to 5% at least one ethylenically unsaturated phosphorus containing monomer without phosphonate functional group, or salts thereof, and c) 0.01 to 3% at least one ethylenically unsaturated monomer carrying at least one alkoxysilane functionality, (ii) at least one pigment, said coating composition having a pigment volume concentration (PVC) of from 40 to 90%, (iii) at least one coating adjuvant, wherein the monomers further comprise, in percentage by weight based on the dry weight of copolymer, monomer e) at 0.5 to 5% of at least one ethylenically unsaturated monomer carrying at least one functional group selected from carboxyl, carboxylic anhydride, hydroxyl, amide, and mixtures thereof.

2. The aqueous coating composition according to claim 1, wherein the monomers further comprise, in percentage by weight based on the dry weight of copolymer, monomer d) up to 3% of at least one ethylenically unsaturated monomer carrying at least one functionality selected from sulfur based acids, or the salts thereof.

**3.** The aqueous coating composition according to claim 1, wherein the monomer b) is selected from phosphoalkyl (meth)acrylates or phosphoalkoxy (meth)acrylates, or the salts thereof.

**Patentansprüche**

**1.** Wässrige Beschichtungszusammensetzung, umfassend:

(i) mindestens eine wässrige Copolymerdispersion, wobei das Copolymer einen mittleren Teilchendurchmesser von 50 bis 350 Nanometer und eine Glasübergangstemperatur (Tg) von -35°C bis 60°C aufweist, wobei das Copolymer aus einem Gemisch von Monomeren, umfassend, in Gewichtsprozent, bezogen auf das Trockengewicht des Copolymers:

a) 92 bis 99,94% mindestens eines ethylenisch ungesättigten nichtionischen Monomers,
b) 0,05 bis 5% mindestens eines ethylenisch ungesättigten phosphorhaltigen Monomers ohne funktionelle Phosphonat-Gruppe oder Salze davon, und
c) 0,01 bis 3% mindestens eines ethylenisch ungesättigten Monomers, welches mindestens eine Alkoxysilan-Funktionalität trägt,
erhalten ist,

(ii) mindestens ein Pigment, wobei die Beschichtungszusammensetzung eine Pigmentvolumenkonzentration (PVC) von 40 bis 90% aufweist;
(iii) mindestens einen Beschichtungszusatzstoff,

wobei die Monomere weiter, in Gewichtsprozent, bezogen auf das Trockengewicht des Copolymers, Monomer

e) zu 0,5 bis 5% mindestens eines ethylenisch ungesättigten Monomers, welches mindestens eine funktionelle Gruppe, ausgewählt aus Carboxyl, Carbonsäureanhydrid, Hydroxyl, Amid, und Gemischen davon, trägt,

umfassen.

**2.** Wässrige Beschichtungszusammensetzung nach Anspruch 1, wobei die Monomere weiter, in Gewichtsprozent, bezogen auf das Trockengewicht des Copolymers, Monomer

d) bis zu 3% mindestens eines ethylenisch ungesättigten Monomers, welches mindestens eine Funktionalität, ausgewählt aus Säuren auf Schwefelbasis oder deren Salzen, trägt,

umfassen.

**3.** Wässrige Beschichtungszusammensetzung nach Anspruch 1, wobei das Monomer b) aus Phosphoalkyl(meth) acrylaten oder Phosphoalkoxy-(meth)acrylaten, oder deren Salzen ausgewählt ist.

**Revendications**

**1.** Composition de revêtement aqueuse comprenant : (i) au moins une dispersion aqueuse de copolymère, ledit copolymère ayant un diamètre moyen de particules de 50 à 350 nm et une température de transition vitreuse (Tg) de -35°C à 60°C, dans laquelle ledit copolymère est obtenu à partir d'un mélange de monomères comprenant, en pourcentage en poids rapporté au poids sec de copolymère : a) de 92 à 99,94 % d'au moins un monomère non ionique éthyléniquement insaturé, b) de 0,05 à 5 % d'au moins un monomère contenant du phosphore éthyléniquement insaturé sans groupe fonctionnel phosphonate, ou de sels de celui-ci, et c) de 0,01 à 3 % d'au moins un monomère éthyléniquement insaturé portant au moins une fonctionnalité alcoxysilane, ii) au moins un pigment, ladite composition de revêtement présentant une concentration en volume de pigment (PVC) de 40 à 90 %, (iii) au moins un adjuvant de revêtement, dans laquelle les monomères comprennent de plus, en pourcentage en poids rapporté au poids sec de copolymère, le monomère e) à de 0,5 à 5 % d'au moins un monomère éthyléniquement insaturé portant au moins un groupe fonctionnel choisi parmi les groupes carboxy, anhydride carboxylique, hydroxyle, amide, et des mélanges de ceux-ci.

2. Composition de revêtement aqueuse selon la revendication 1, dans laquelle les monomères comprennent de plus, en pourcentage en poids rapporté au poids sec de copolymère, le monomère d) jusqu'à 3 % d'au moins un monomère éthyléniquement insaturé portant au moins une fonctionnalité choisie parmi des acides à base de soufre ou les sels de ceux-ci.

3. Composition de revêtement aqueuse selon la revendication 1, dans laquelle le monomère b) est choisi parmi des (méth)acrylates de phosphoalkyle ou des (méth)acrylates de phosphoalcoxy ou les sels de ceux-ci.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6492451 B
- EP 1193298 A
- EP 0012949 A
- US 4325856 A
- US 4654397 A
- US 4814373 A
- US 20030236374 A

**Non-patent literature cited in the description**

- **T.G. FOX.** *Bull. Am. Physics Soc.,* 1956, vol. 1 (3), 123
- Polymer Handbook. Interscience Publishers